# FASCICULE DE BREVET EUROPEEN

(11) **EP 3 960 626 B1**
(45) Date de publication et mention de la délivrance du brevet: **30.11.2022**
(21) Numéro de dépôt: 21183854.5
(22) Date de dépôt: 06.07.2021
(51) Int. Cl.: B64D 11/02, B64D 45/00

(54) **AÉRONEF COMPRENANT DES TOILETTES PRÉVUES POUR CONTENIR LES EFFETS D'UN DISPOSITIF MALVEILLANT**
FLUGZEUGE EINSCHLIESSLICH TOILETTEN, DIE DIE AUSWIRKUNGEN EINER SCHÄDLICHEN GERÄTE EINHALTEN
AIRCRAFT INCLUDING TOILETS DESIGNED TO CONTAIN THE EFFECTS OF A MALICIOUS DEVICE

(30) Priorité: 01.09.2020 FR 2008875
(43) Date de publication de la demande: 02.03.2022
(73) Titulaire: Airbus (S.A.S.), 31700 Blagnac (FR)
(72) Inventeur: LEGER, Thierry, 31700 BLAGNAC (FR); SALGUES, Benoit, 31700 BLAGNAC (FR)
(74) Mandataire: Sarraméa, Claude

(56) Documents cités:
- EP-A1- 0 555 984
- EP-A1- 3 643 612
- WO-A1-93/06430
- WO-A1-2005/116574
- WO-A1-2007/031321
- WO-A1-2013/120764
- FR-A1- 2 910 436
- US-A1- 2005 230 550
- US-A1- 2017 296 687

## Description

L'invention est relative au domaine de la protection des aéronefs contre les actes de malveillance. Dans le passé, des aéronefs ont fait l'objet d'attaques de la part de personnes malveillantes, en particulier au moyen d'explosifs. Ces attaques, selon les cas, ont eu pour conséquence des blessures de passagers, voire pour les plus graves un endommagement du fuselage de l'aéronef entraînant la destruction de l'aéronef et mettant en péril l'ensemble des passagers. Les membres d'équipage d'un aéronef sont formés pour réagir à une attaque d'une personne malveillante cherchant à faire exploser un dispositif explosif dans l'aéronef. Toutefois, les procédures en vigueur sont complexes à mettre en œuvre et il existe un besoin d'un dispositif permettant de faciliter la tâche des membres d'équipage dans une telle situation. Il existe également un besoin d'un dispositif permettant de faciliter la tâche des membres d'équipage dans le cas d'une personne malveillante préparant une attaque chimique ou bactériologique.

Le document WO 2013/120764 A1 décrit un système de ventilation de toilettes d'un aéronef dans lequel la ventilation des toilettes est contrôlée en fonction d'un taux de méthane dans l'air.

### EXPOSE DE L'INVENTION :

La présente invention a notamment pour but d'apporter une solution à ce problème. Elle concerne un aéronef comprenant des toilettes, conforme à la revendication 1.

Ainsi, les membres d'équipage se trouvant en présence d'une personne malveillante cherchant à utiliser un dispositif malveillant de type chimique ou bactériologique dans l'aéronef peuvent placer ce dispositif malveillant de type chimique ou bactériologique dans les toilettes de telle façon qu'une substance toxique issue du dispositif malveillant ne risque pas d'atteindre les passagers ou les membres d'équipage.

Dans un mode de réalisation, le dispositif de protection correspond à un blindage conformé pour contenir les effets d'une explosion d'un second dispositif malveillant, le second dispositif malveillant étant un dispositif explosif.

De façon avantageuse, le blindage est disposé sur l'ensemble des parois des toilettes.

De façon avantageuse encore, les toilettes comprenant une porte, l'aéronef comprend un blindage disposé sur un élément structurel de l'aéronef placé en regard de ladite porte.

De façon avantageuse encore, l'aéronef comprend un matériau amortisseur disposé entre une paroi des toilettes et un élément structurel de l'aéronef.

De façon particulière, le blindage correspond à la combinaison d'un matériau résistant à l'impact de projectiles et d'un matériau amortisseur de l'impact des projectiles.

### DESCRIPTION DETAILLEE :

L'invention sera mieux comprise à la lecture de la description qui suit et à l'examen des figures annexées.
La figure 1 est une vue d'un aéronef conforme à un mode de réalisation de l'invention.
La figure 2 illustre de façon schématique une partie du fuselage de l'aéronef de la figure 1, comprenant des toilettes.
La figure 3 illustre de façon schématique, en vue de dessus, les toilettes de la figure 2, dans un mode particulier de réalisation de l'invention.
La figure 4 illustre de façon schématique, en vue de dessus, les toilettes de la figure 2, dans le mode particulier de réalisation de l'invention.
La figure 5 illustre de façon schématique, en vue de dessus, les toilettes de la figure 2, dans le mode particulier de réalisation de l'invention.
La figure 6 illustre de façon schématique les toilettes de la figure 2, dans un mode de réalisation de l'invention.

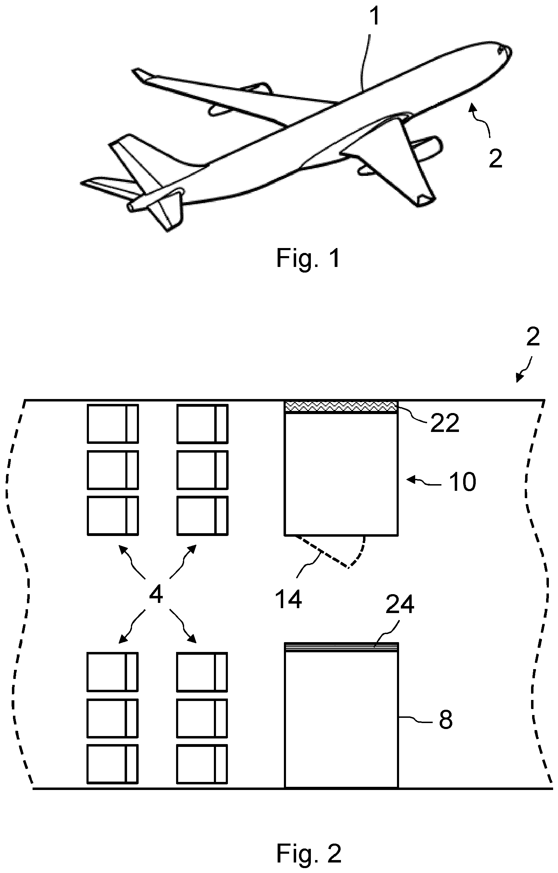

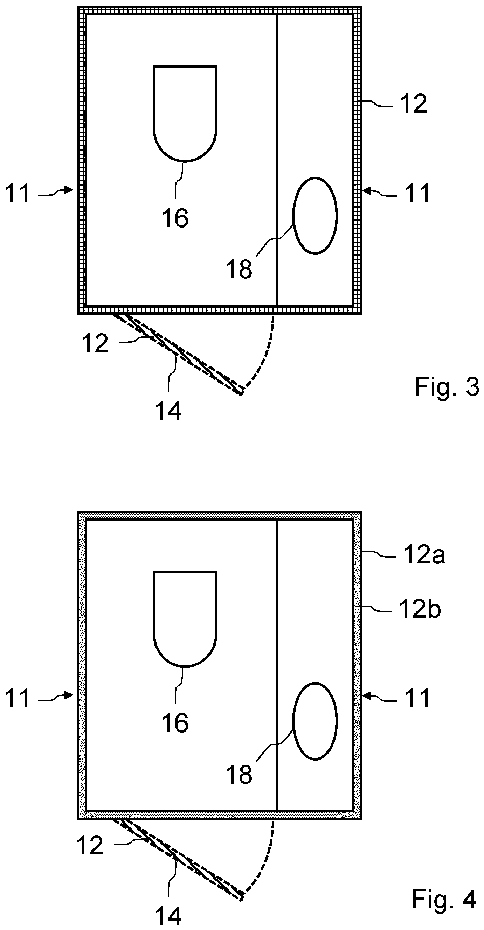

L'aéronef 1 représenté sur la figure 1 comporte un fuselage 2. Comme illustré sur la figure 2, le fuselage comporte des toilettes 10, ainsi qu'un ensemble de sièges passagers 4. Les toilettes 10 sont par exemple situées dans une partie arrière de la cabine passagers, à l'arrière des sièges 4. Les toilettes comprennent par exemple une cuvette 16 et un lavabo 18 tels qu'illustrés sur les figures 3 à 5.

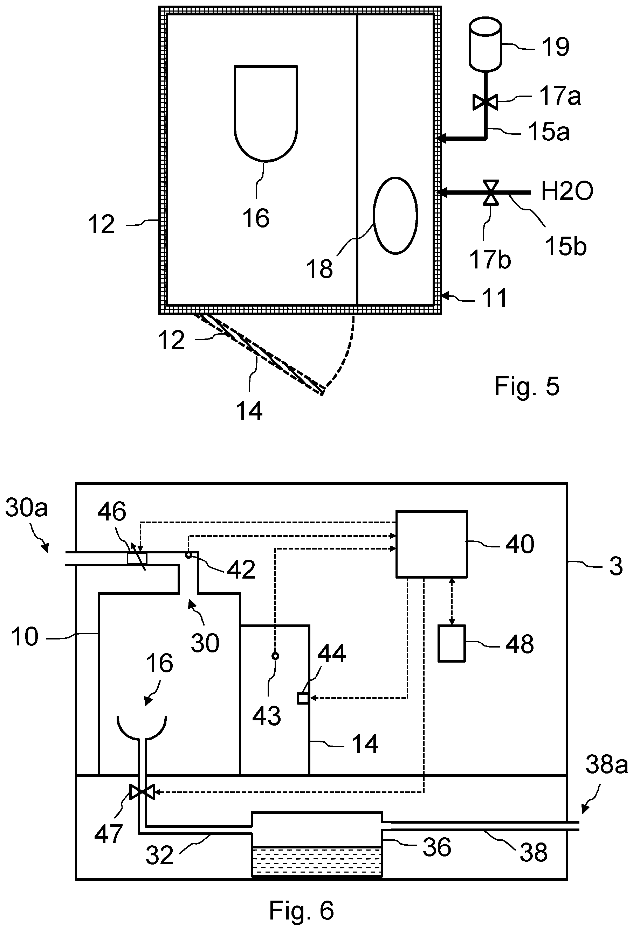

Dans un mode de réalisation illustré sur la figure 6, les toilettes 10 sont prévues pour contenir les effets d'un dispositif malveillant correspondant à un dispositif d'attaque chimique ou bactériologique.

Dans une première variante du mode de réalisation, l'aéronef comprend un conduit 30 dont une première extrémité est reliée aux toilettes 10, par exemple au plafond comme illustré sur la figure, et dont une deuxième extrémité 30a débouche à l'extérieur de l'aéronef. Un système d'obturation, correspondant à un limiteur de débit commandable 46 est installé en série sur le conduit 30.

L'aéronef comprend en outre une unité de traitement 40 prévue pour commander le limiteur de débit 46. L'unité de traitement 40 comprend par exemple un microprocesseur ou un microcontrôleur. L'aéronef comprend également une interface homme machine 48 reliée à l'unité de traitement 40.

Lorsqu'un membre d'équipage est confronté à un dispositif suspect qu'il estime correspondre à un dispositif d'attaque chimique, il peut placer ce dispositif suspect à l'intérieur des toilettes 10 et refermer la porte 14. Au moyen de l'interface homme machine 48, le membre d'équipage signale à l'unité de traitement 40 la présence du dispositif suspect à l'intérieur des toilettes. L'unité de traitement 40 commande alors l'ouverture du limiteur de débit 46, qui était jusqu'alors en position d'utilisation normale correspondant à un débit d'air normal pour la ventilation des toilettes. L'ouverture du limiteur de débit 46 permet d'augmenter le débit d'air dans le conduit 30. Etant donné que le conduit 30 débouche à l'extérieur du fuselage de l'aéronef et que l'intérieur du fuselage est pressurisé, le conduit 30 permet de créer une évacuation d'air des toilettes 10 vers l'extérieur du fuselage. Ainsi, si le dispositif suspect vient à dégager une substance toxique dans les toilettes, par exemple une substance susceptible de présenter un risque chimique ou bactériologique, l'augmentation du débit d'air dans le conduit 30 permet d'évacuer plus facilement cette substance vers l'extérieur du fuselage par le conduit 30. Cela permet de préserver la sécurité des passagers et des membres d'équipage présents dans le fuselage.

De façon avantageuse, l'aéronef comprend en outre au moins un capteur de substance toxique, par exemple une substance chimique ou bactériologique. Dans un premier exemple, ce capteur correspond à un capteur 42 disposé au plafond des toilettes ou à proximité de l'extrémité du conduit 30 reliée aux toilettes. Dans un deuxième exemple, ce capteur correspond à un capteur 43 disposé sur une cloison des toilettes ou sur la porte 14. Le capteur est relié à une entrée de l'unité de traitement 40. Lorsque l'unité de traitement reçoit du capteur 42 ou 43 une information correspondant à la détection d'une substance toxique, elle commande l'ouverture du limiteur de débit 46, ce qui permet de créer une évacuation d'air des toilettes 10 vers l'extérieur du fuselage. Par conséquent, cela permet d'évacuer la substance toxique à l'extérieur de l'aéronef, sans intervention d'un membre d'équipage. Cela est particulièrement intéressant dans le cas où une personne malveillante viendrait à s'isoler dans les toilettes pour préparer une telle substance toxique en vue de commettre un acte malveillant dans le fuselage. De préférence, lorsqu'elle reçoit une information de détection d'une substance toxique par le capteur 42 ou 43, l'unité de traitement 40 commande en outre le verrouillage d'une serrure 44 de la porte 14 de façon à empêcher la personne malveillante de sortir des toilettes pour commettre un acte malveillant dans la cabine passagers. De façon avantageuse, l'unité de traitement 40 commande également l'activation d'une alerte visuelle ou sonore sur l'interface homme machine 48 de façon à prévenir un membre d'équipage.

De façon usuelle, la cuvette 16 des toilettes 10 est reliée à un réservoir d'eau usée 36 par une canalisation 32. Le réservoir d'eau usée 32 est relié à une canalisation 38 dont une extrémité 38a débouche à l'extérieur de l'aéronef. Une vanne 47 est disposée en série sur la canalisation 32. La vanne 47 est une vanne utilisée de façon usuelle pour permettre l'évacuation du contenu de la cuvette 16 vers le réservoir d'eau usée 36. Pour cela, l'ouverture de la vanne 47 est commandée par l'appui d'un utilisateur sur un bouton d'évacuation de la cuvette. Conformément à une deuxième variante du deuxième mode de réalisation de l'invention, la vanne 47 est en outre commandable par l'unité de traitement 40. Lorsque l'unité de traitement reçoit du capteur 42 ou 43 une information correspondant à la détection d'une substance toxique, par exemple chimique ou bactériologique, elle commande l'ouverture de la vanne 47, ce qui permet de créer une évacuation d'air des toilettes 10 vers l'extérieur du fuselage par les canalisations 32 et 38, via le réservoir d'eau usée 36. Par conséquent, cela permet d'évacuer la substance toxique à l'extérieur de l'aéronef.

La première variante et la deuxième variante du mode de réalisation permettent chacune l'évacuation d'une substance toxique vers l'extérieur de l'aéronef lorsqu'une telle substance est présente dans les toilettes. Chacune des deux variantes peut être mise en œuvre séparément. Toutefois, les deux variantes peuvent être combinées, ce qui permet d'augmenter le débit d'évacuation d'air des toilettes vers l'extérieur de l'aéronef.

Dans un mode particulier de réalisation illustré sur les figures 3 à 5, mis en œuvre en combinaison avec le mode de réalisation illustré sur la figure 6, les toilettes 10 sont prévues pour contenir les effets d'un second dispositif malveillant correspondant à un dispositif explosif. Ainsi, lorsqu'un membre d'équipage est confronté à un dispositif suspect qu'il estime correspondre à un dispositif explosif, il peut placer ce dispositif suspect à l'intérieur des toilettes 10 et refermer la porte 14. Les toilettes 10 comprennent un blindage 12 de l'ensemble de leurs parois 11. Ces parois 11 comprennent un ensemble de cloisons (généralement sensiblement verticales lorsque l'aéronef est posé au sol), ainsi qu'un plancher et un plafond des toilettes 10. Les toilettes 10 comportent une porte 14 qui, de préférence, comprend aussi un blindage 12. De façon avantageuse, comme illustré sur la figure 4, le blindage 12 comprend un blindage balistique 12a et un blindage amortisseur 12b. Le blindage balistique comprend un matériau résistant à l'impact de projectiles, tel qu'une couche de fibres d'aramide (par exemple de type Kevlar^{®}) ou une couche de polyéthylène. Le blindage amortisseur comprend un matériau amortisseur de l'impact de projectiles, tel qu'une couche de mousse amortissante (« damping foam » en anglais), correspondant par exemple à une mousse rigide ou semi-rigide. Le blindage amortisseur 12b est situé du côté intérieur des toilettes relativement au blindage balistique 12a. Ainsi, en cas d'explosion à l'intérieur des toilettes, le blindage amortisseur 12b atténue l'onde de choc issue de l'explosion et le blindage balistique 12a arrête des projections de matière issues de l'explosion (par exemple des morceaux de métal) afin de contenir lesdites projections de matière à l'intérieur des toilettes.

De façon avantageuse, comme illustré sur la figure 2, l'aéronef comprend un matériau amortisseur 22 disposé entre les toilettes 10 et un élément structurel de l'aéronef situé à proximité desdites toilettes. Dans l'exemple illustré sur la figure, l'élément structurel correspond à une paroi du fuselage 2. Toutefois, sans sortir du cadre de l'invention, l'élément structurel peut aussi correspondre à une cloison intérieure du fuselage, au plancher de la cabine passagers, etc. En cas d'explosion à l'intérieur des toilettes 10, la présence du matériau amortisseur 22 permet de limiter la propagation, vers le fuselage 2 de l'aéronef, d'une onde de choc due à ladite explosion.

De façon avantageuse encore, l'aéronef comprend un blindage 24 disposé sur un élément structurel 8 de l'aéronef placé en regard de la porte 14 des toilettes. Ainsi, si la porte 14 vient à s'ouvrir sous l'effet d'une explosion à l'intérieur des toilettes 10, ce blindage 24 permet de limiter les effets de l'onde de choc à l'intérieur du fuselage 2 et d'arrêter des projectiles issus de l'explosion sans qu'ils risquent d'atteindre des parties sensibles de l'aéronef. De façon non limitative, l'élément structurel 8 correspond par exemple à un élément de cuisine (« galleys » en anglais) de l'aéronef.

De façon particulière, comme illustré sur la figure 5, l'aéronef comprend en outre une canalisation d'arrivée d'un fluide vers au moins l'une des parois 11 des toilettes, ainsi qu'une vanne montée en série sur cette canalisation. En cas de risque d'explosion dans les toilettes, par exemple après y avoir placé un objet suspect, un membre d'équipage peut commander l'ouverture de la vanne. Dans une première variante, le fluide correspond à de l'eau amenée par une canalisation 15b sur laquelle est montée en série une vanne 17b. La canalisation 15b débouche dans une structure poreuse (ou absorbante) de la paroi 11 ou du blindage 12 associé à cette paroi. Ainsi, lorsque la vanne 17b est ouverte, cette structure poreuse (ou absorbante) se remplit d'eau, ce qui permet de limiter les effets exothermiques de l'explosion sur la paroi 11 des toilettes et par conséquent sur leur environnement dans le fuselage, dans la mesure où l'eau absorbe une partie de la chaleur issue de l'explosion. Dans une deuxième variante, le fluide correspond à un produit chimique contenu dans un réservoir 19 et amené par une canalisation 15a sur laquelle est montée en série une vanne 17a. Le produit chimique est choisi parmi des produits chimiques ayant des propriétés élevées d'absorption de la chaleur. La canalisation 15a débouche dans une structure poreuse (ou absorbante) de la paroi 11 ou du blindage 12 associé à cette paroi. Ainsi, lorsque la vanne 17b est ouverte, cette structure poreuse (ou absorbante) se remplit dudit produit chimique, ce qui permet de limiter les effets exothermiques de l'explosion sur la paroi 11 des toilettes et par conséquent sur leur environnement dans le fuselage, dans la mesure où le produit chimique absorbe une partie de la chaleur issue de l'explosion.

De façon avantageuse, avec le mode particulier de réalisation illustré sur les figures 3 à 5, les toilettes 10 permettent de contenir à la fois les effets d'un dispositif malveillant de type explosif et d'un dispositif malveillant de type chimique ou bactériologique. Le conduit 30 et/ou la canalisation 38 permettent avec ce mode particulier de réalisation, en outre, d'évacuer vers l'extérieur de l'aéronef des fumées qui seraient issues d'une explosion.

## Revendications

1. Aéronef (1) comprenant des toilettes (10) qui comprennent un dispositif de protection (12, 30, 47, 32, 46, 38) conformé pour contenir les effets d'un dispositif malveillant, afin de protéger d'une part un fuselage (2) de l'aéronef et d'autre part des passagers de l'aéronef contre lesdits effets du dispositif malveillant, dans lequel :
- le dispositif de protection (30, 47, 32, 46, 38) est conformé pour évacuer à l'extérieur de l'aéronef une substance toxique issue du dispositif malveillant, le dispositif malveillant étant un dispositif d'attaque chimique ou bactériologique ;
- le dispositif de protection comprend un conduit (30, 32) d'évacuation d'air équipé d'un système d'obturation (46, 47) prévu pour être ouvert en cas de détection d'une attaque chimique ou bactériologique ; et
- l'aéronef comprenant un capteur (42, 43) de substance toxique, le dispositif de protection comprend une unité de traitement (40) reliée au capteur (42, 43) de substance toxique, l'unité de traitement étant configurée pour commander l'ouverture du système d'obturation lorsque le capteur fournit une information correspondant à la présence d'une substance toxique,
**caractérisé en ce que** l'unité de traitement est configurée pour commander le verrouillage d'une porte des toilettes lorsque le capteur fournit une information correspondant à la présence d'une substance toxique.

2. Aéronef selon la revendication 1, **caractérisé en ce que** le dispositif de protection comprend en outre un blindage (12) conformé pour contenir les effets d'une explosion d'un second dispositif malveillant, le second dispositif malveillant étant un dispositif explosif.

3. Aéronef selon la revendication 2, **caractérisé en ce que** le blindage (12) est disposé sur l'ensemble des parois (11) des toilettes.

4. Aéronef selon l'une quelconque des revendications 2 ou 3, **caractérisé en ce que** les toilettes comprenant une porte (14), l'aéronef comprend un blindage (24) disposé sur un élément structurel (8) de l'aéronef placé en regard de ladite porte.

5. Aéronef selon l'une quelconque des revendications 2 à 4, **caractérisé en ce que** l'aéronef comprend un matériau amortisseur (22) disposé entre une paroi des toilettes et un élément structurel de l'aéronef.

6. Aéronef selon l'une quelconque des revendications 2 à 5, **caractérisé en ce que** le blindage (12) correspond à la combinaison d'un blindage balistique (12a) et d'un blindage amortisseur de l'impact de projectiles (12b).

## Patentansprüche

1. Luftfahrzeug (1), welches Toiletten (10) umfasst, die eine Schutzvorrichtung (12, 30, 47, 32, 46, 38) umfassen, die dazu ausgebildet ist, die Auswirkungen eines schädlichen Geräts einzudämmen, um einerseits einen Rumpf (2) des Luftfahrzeugs und andererseits Passagiere des Luftfahrzeugs vor diesen Auswirkungen des schädlichen Geräts zu schützen, wobei:
- die Schutzvorrichtung (30, 47, 32, 46, 38) dazu ausgebildet ist, eine giftige Substanz, die von dem schädlichen Gerät abgegeben wird, aus dem Luftfahrzeug nach draußen abzuführen, wobei das schädliche Gerät ein Gerät für einen chemischen oder bakteriologischen Angriff ist;
- die Schutzvorrichtung eine Luftauslassleitung (30, 32) umfasst, die mit einem Verschlusssystem (46, 47) ausgestattet ist, das dafür vorgesehen ist, im Fall einer Erkennung eines chemischen oder bakteriologischen Angriffs geöffnet zu werden; und
- das Luftfahrzeug einen Sensor (42, 43) für giftige Substanzen umfasst, wobei die Schutzvorrichtung eine mit dem Sensor (42, 43) für giftige Substanzen verbundene Verarbeitungseinheit (40) umfasst, wobei die Verarbeitungseinheit dafür ausgelegt ist, das Öffnen des Verschlusssystems zu steuern, wenn der Sensor eine Information liefert, die dem Vorhandensein einer giftigen Substanz entspricht,
**dadurch gekennzeichnet, dass** die Verarbeitungseinheit dafür ausgelegt ist, die Verriegelung einer Tür der Toiletten zu steuern, wenn der Sensor eine Information liefert, die dem Vorhandensein einer giftigen Substanz entspricht.

2. Luftfahrzeug nach Anspruch 1, **dadurch gekennzeichnet, dass** die Schutzvorrichtung außerdem eine Abschirmung (12) umfasst, die dazu ausgebildet ist, die Auswirkungen einer Explosion eines zweiten schädlichen Geräts einzudämmen, wobei das zweite schädliche Gerät ein Sprengkörper ist.

3. Luftfahrzeug nach Anspruch 2, **dadurch gekennzeichnet, dass** die Abschirmung (12) auf der Gesamtheit der Wände (11) der Toiletten angeordnet ist.

4. Luftfahrzeug nach einem der Ansprüche 2 oder 3, **dadurch gekennzeichnet, dass** die Toiletten eine Tür (14) umfassen, wobei das Luftfahrzeug eine Abschirmung (24) umfasst, die auf einem Strukturelement (8) des Luftfahrzeugs angeordnet ist, das gegenüber der Tür angeordnet ist.

5. Luftfahrzeug nach einem der Ansprüche 2 bis 4, **dadurch gekennzeichnet, dass** das Luftfahrzeug ein Dämpfungsmaterial (22) umfasst, das zwischen einer Wand der Toiletten und einem Strukturelement des Luftfahrzeugs angeordnet ist.

6. Luftfahrzeug nach einem der Ansprüche 2 bis 5, **dadurch gekennzeichnet, dass** die Abschirmung (12) der Kombination einer kugelsicheren Abschirmung (12a) und einer den Aufprall von Geschossen dämpfenden Abschirmung (12b) entspricht.

## Claims

1. Aircraft (1) comprising toilets (10) that comprise a protection device (12, 30, 47, 32, 46, 38) configured to contain the effects of a malicious device, in order to protect both a fuselage (2) of the aircraft and passengers of the aircraft against said effects of the malicious device, in which:
- the protection device (30, 47, 32, 46, 38) is configured to evacuate to outside the aircraft a toxic substance coming from the malicious device, the malicious device being a chemical or bacteriological attack device;
- the protection device comprises an air evacuation duct (30, 32) equipped with a shut-off system (46, 47) designed to be opened in the event of detection of a chemical or bacteriological attack; and
- the aircraft comprising a toxic substance sensor (42, 43), the protection device comprises a processing unit (40) connected to the toxic substance sensor (42, 43), the processing unit being configured to command the opening of the shut-off system in the event that the sensor provides information corresponding to the presence of a toxic substance;
**characterized in that** the processing unit is configured to command the locking of a door of the toilets in the event that the sensor provides information corresponding to the presence of a toxic substance.

2. Aircraft according to Claim 1, **characterized in that** the protection device also comprises shielding (12) configured to contain the effects of an explosion of a second malicious device, the second malicious device being an explosive device.

3. Aircraft according to Claim 2, **characterized in that** the shielding (12) is disposed on all the walls (11) of the toilets.

4. Aircraft according to either one of Claims 2 and 3, **characterized in that**, the toilets comprising a door (14), the aircraft comprises shielding (24) disposed on a structural element (8) of the aircraft that is placed opposite said door.

5. Aircraft according to any one of Claims 2 to 4, **characterized in that** the aircraft comprises a damping material (22) disposed between a wall of the toilets and a structural element of the aircraft.

6. Aircraft according to any one of Claims 2 to 5, **characterized in that** the shielding (12) corresponds to the combination of ballistic shielding (12a) and shielding (12b) that damps the impact of projectiles.
